# DEMANDE DE BREVET EUROPEEN

(11) **EP 4 517 959 A1**
(43) Date de publication de la demande: **05.03.2025**
(21) Numéro de dépôt: 23306427.8
(22) Date de dépôt: 29.08.2023
(51) Int. Cl.: H01M 50/209, H01M 50/262, H01M 50/244

(54) **BATTERIE ÉLECTROCHIMIQUE COMPRENANT UNE ATTACHE RAPIDE ET PROCÉDÉ D'ASSEMBLAGE D'UNE TELLE BATTERIE**

(71) Demandeur: Automotive Cells Company SE, 33520 Bruges (FR)
(72) Inventeur: FEIX, Antoine, 33000 BORDEAUX (FR); CHAUVEAU, Pierre, 33520 BRUGES (FR); BAYLAC, Johan, 33800 BORDEAUX (FR); HERON, Wilfried, 33710 MOMBRIER (FR)
(74) Mandataire: Lavoix

(57) **Abrégé**

Batterie électrochimique (1) comprenant un boîtier (10) qui comprend une plaque de fond (30) et renferme des cellules électrochimiques (5) placées sur la plaque de fond (30),
le boîtier (10) comportant au moins une traverse (15) liée à la plaque de fond (30) par au moins une attache (20) engagée suivant une direction d'insertion (Z) dans une cavité d'insertion (75) au travers d'un trou (72) de la plaque de fond (30),
l'attache (20) comprenant un corps (100), dont une extrémité distale est reçue dans la cavité d'insertion (75), et une tête (105) en appui sur la plaque de fond (30),
la cavité d'insertion (75) comporte un épaulement (95) transversal à la direction d'insertion (Z), et
l'attache (20) comporte au moins un élément d'ancrage (115) faisant saillie transversalement au niveau de l'extrémité distale du corps, et coopérant dans une position verrouillée avec l'épaulement (95) pour bloquer l'attache en translation par rapport à la traverse (15) et au boîtier (10) suivant la direction d'insertion (Z).

## Description

La présente invention concerne une batterie électrochimique comprenant un boîtier, le boîtier comprenant au moins une plaque de fond et renfermant une pluralité de cellules électrochimiques, chacune placée sur la plaque de fond,
le boîtier comportant au moins une traverse liée à la plaque de fond par au moins une attache engagée suivant une direction d'insertion dans une cavité d'insertion de la traverse au travers d'un trou de la plaque de fond,
l'attache comprenant un corps, dont une extrémité distale est reçue dans la cavité d'insertion de ladite traverse, et une tête s'étendant radialement à partir du corps à une extrémité proximale du corps, la tête étant en appui sur la plaque de fond.

L'invention concerne également un procédé d'assemblage des éléments d'une telle batterie.

L'invention s'applique en particulier à la réalisation d'une batterie, notamment pour véhicule électrique ou hybride.

On entend par « batterie » une pluralité de cellules électrochimiques connectées électriquement les unes aux autres. Selon un exemple particulier de batterie, la pluralité de cellules électrochimiques est agencée sous la forme d'un ou plusieurs module(s), chaque module comprenant plusieurs cellules électrochimiques connectées électriquement les unes aux autres et assemblées mécaniquement les unes aux autres par un système d'assemblage, tel que des plaques d'assemblage.

La batterie comporte en général un boîtier participant à la protection de ses éléments internes, en particulier les cellules électrochimiques et les connecteurs électriques. Le boîtier prédéfinit un ou plusieurs compartiments dans lesquels les cellules électrochimiques ou les modules sont respectivement agencées lors de l'assemblage de la batterie.

Des traverses sont positionnées dans le boîtier et liées à celui-ci pour assurer une reprise des efforts exercés sur la batterie en cas de choc, et éventuellement pour contribuer au maintien des cellules électrochimiques en place dans le boîtier.

Les traverses sont notamment dimensionnées pour résister au flambement afin de résister aux efforts qu'un choc pourrait provoquer.

Il est connu de lier ces traverses au boîtier par l'intermédiaire d'une pluralité de vis, chacune des vis étant insérée à la fois dans un trou traversant du boîtier et un trou taraudé d'une traverse.

Au vu du nombre de traverses, ainsi que du nombre de vis nécessaires pour garantir la résistance au flambement de chaque traverse individuellement, l'assemblage de la batterie et son éventuel démontage, par exemple pour le remplacement d'une ou plusieurs cellules électrochimiques, sont particulièrement longs.

Un but de l'invention est donc de fournir une batterie électrochimique dont l'assemblage et optionnellement le démontage sont facilités et notamment moins longs qu'avec un système de fixation par vis, tout en conservant une résistance comparable aux chocs éventuellement subis par la batterie ou par un véhicule qu'elle équipe.

A cet effet, l'invention a pour objet une batterie électrochimique comprenant un boîtier, le boîtier comprenant au moins une plaque de fond et renfermant une pluralité de cellules électrochimiques, chacune placée sur la plaque de fond,

le boîtier comportant au moins une traverse liée à la plaque de fond par au moins une attache engagée suivant une direction d'insertion dans une cavité d'insertion de la traverse au travers d'un trou de la plaque de fond, l'attache comprenant un corps, dont une extrémité distale est reçue dans la cavité d'insertion de ladite traverse, et une tête s'étendant radialement à partir du corps à une extrémité proximale du corps, la tête étant en appui sur la plaque de fond,
la batterie électrochimique étant caractérisée en ce que :
la cavité d'insertion comporte un épaulement transversal à la direction d'insertion, et l'au moins une attache comporte au moins un élément d'ancrage faisant saillie transversalement par rapport au corps au niveau de son extrémité distale,
l'élément d'ancrage de l'attache coopérant dans une position verrouillée avec l'épaulement pour bloquer l'attache en translation par rapport à la traverse et au boîtier suivant la direction d'insertion.

Selon des modes particuliers de réalisation, la batterie comprend l'une ou plusieurs des caractéristiques suivantes, prise(s) isolément ou selon toutes les combinaisons techniquement possibles :
- l'au moins une traverse comprend un pilier dans lequel est ménagée la cavité d'insertion et une table de compression s'étendant perpendiculairement au pilier, au moins une cellule électrochimique étant enserrée entre la table de compression et la plaque de fond ;
- la cavité d'insertion s'étend dans une première moitié du pilier à l'opposé de la table de compression ;
- l'attache est munie d'un joint assurant la fermeture étanche à l'air et/ou à l'eau du trou respectif ;
- l'au moins une attache assemble la traverse respective et la plaque de fond de manière amovible, l'élément d'ancrage de l'attache étant déplaçable par rapport à l'épaulement entre la position verrouillée et au moins une position déverrouillée, dans laquelle l'élément d'ancrage de l'attache ne coopère pas avec l'épaulement ;
- l'attache et la cavité d'insertion respective sont configurées pour que la position verrouillée et la position déverrouillée de l'élément d'ancrage diffèrent d'une rotation d'une fraction de tour suivant la direction d'insertion par rapport à la traverse ;
- au moins une fraction du corps de l'attache est formée dans un matériau élastique et configurée pour que l'attache soit déformable élastiquement entre une configuration de montage, dans laquelle la translation du corps dans la cavité d'insertion suivant la direction d'insertion est possible, et une configuration relâchée, l'attache étant dans la configuration relâchée si l'élément d'ancrage de l'attache est en position verrouillée ;
- un alésage s'étend dans le corps suivant la direction d'insertion à partir de son extrémité proximale, l'attache comprenant en outre un élément d'aide au verrouillage amovible et qui comporte une tige s'étendant suivant la direction d'insertion, l'élément d'aide au verrouillage étant configuré pour que son insertion dans l'alésage puis sa translation suivant la direction d'insertion provoquent le passage de l'attache de la configuration de montage à la configuration relâchée par déformation élastique, et inversement si l'élément d'aide au verrouillage est ultérieurement retiré de l'alésage ;
- l'élément d'aide au verrouillage comporte un joint d'étanchéité entre le corps et l'élément d'aide au verrouillage.

L'invention a aussi pour objet un procédé d'assemblage d'une batterie telle que décrite ci-dessus, comprenant :
a) le positionnement d'au moins une cellule électrochimique sur la plaque de fond du boîtier et d'au moins une traverse en regard de la plaque de fond ;
b) l'insertion dans le trou de l'extrémité distale du corps de l'au moins une attache ;
c) la translation du corps, relativement à la traverse et au boîtier suivant la direction d'insertion, à travers le trou et une cavité d'insertion de la traverse, jusqu'à ce que la tête de l'attache soit en contact avec la plaque de fond ; et
d) le passage de l'élément d'ancrage de l'attache dans la position verrouillée, dans laquelle l'élément d'ancrage coopère avec l'épaulement pour bloquer l'attache en translation par rapport à la traverse et au boîtier suivant la direction d'insertion.

Selon un mode particulier de réalisation, le procédé comprend l'une ou plusieurs des caractéristiques suivantes, prise(s) isolément ou selon toutes les combinaisons techniquement possibles :
- le passage de l'élément d'ancrage de l'attache à la position verrouillée est obtenu par rotation d'une fraction de tour suivant la direction d'insertion par rapport à la traverse respective ;
- au moins une fraction du corps de l'attache est formée dans un matériau élastique,
   et
   a) pour ladite insertion dans le trou et ladite translation du corps, l'attache est dans une configuration de montage, dans laquelle la translation du corps dans la cavité d'insertion suivant la direction d'insertion est possible, et
   b) le passage de l'élément d'ancrage de l'attache dans la position verrouillée est obtenu par une déformation élastique de l'attache de la configuration de montage à une configuration relâchée.

L'invention a aussi pour objet un procédé de démontage d'une batterie telle que décrite ci-dessus, comprenant :
le passage de l'élément d'ancrage de l'attache de la position verrouillée à une position déverrouillée, dans laquelle l'élément d'ancrage de l'attache ne coopère pas avec l'épaulement, par rotation d'une fraction de tour suivant la direction d'insertion par rapport à la traverse, et la translation du corps suivant la direction d'insertion en sens inverse de l'assemblage à travers le trou jusqu'à ce que le corps soit hors du boîtier et de la traverse.

L'invention a aussi pour objet un procédé d'assemblage d'une batterie telle que décrit ci-dessus, dans lequel :
- au moins une fraction du corps de l'attache est formée dans un matériau élastique, et
- pour ladite insertion dans le trou et ladite translation du corps, l'attache est dans une configuration de montage, dans laquelle la translation du corps dans la cavité d'insertion suivant la direction d'insertion est possible, et
- le passage de l'élément d'ancrage de l'attache dans la position verrouillée est obtenu par une déformation élastique de l'attache de la configuration de montage à une configuration relâchée,
- le corps de l'attache comprend en outre un alésage s'étendant suivant la direction d'insertion à partir de l'extrémité proximale du corps,
- l'attache comprend en outre un élément d'aide au verrouillage amovible et qui comporte une tige s'étendant suivant la direction d'insertion,
le procédé comprenant en outre l'insertion de l'élément d'aide au verrouillage dans l'alésage et sa translation suivant la direction d'insertion pour faire passer l'attache par déformation élastique de la configuration de montage à la configuration relâchée et provoquer simultanément le passage de l'élément d'ancrage de l'attache dans la position verrouillée.

L'invention a aussi pour objet un procédé de démontage d'une batterie montée suivant le procédé décrit ci-dessus, comprenant
a) le retrait de l'élément d'aide au verrouillage hors de l'alésage par translation relativement au corps suivant la direction d'insertion en sens inverse de l'assemblage, pour provoquer le passage de l'attache de la configuration relâchée à la configuration de montage par déformation élastique et simultanément le passage de l'élément d'ancrage de la position verrouillée à une position déverrouillée dans laquelle l'élément d'ancrage ne coopère pas avec l'épaulement, puis
b) le retrait du corps hors de la cavité d'insertion et du trou par translation relativement à la traverse respective et au boîtier suivant la direction d'insertion en sens inverse de l'assemblage.

L'invention sera mieux comprise à la lecture de la description qui va suivre, donnée uniquement à titre d'exemple et faite en se référant aux dessins annexés, sur lesquels :
- la figure 1 est une vue en perspective et en éclaté d'une batterie selon l'invention,
- la figure 2 est une vue de dessous de la batterie représentée sur la figure 1,
- la figure 3 est une vue en perspective d'une traverse seule,
- la figure 4 est une vue en perspective d'une attache liant une portion d'une traverse à une portion de boîtier selon un premier mode de réalisation, vue dans laquelle les cellules électrochimiques ont été omises,
- la figure 5 est une vue en coupe suivant un plan médiateur de la traverse de l'attache et des portions de boîtier et de la traverse représentées sur la figure 4,
- les figures 6 et 7 sont des vues en coupe, suivant deux plans orthogonaux entre eux, d'une attache suivant un troisième mode de réalisation et des portions du boîtier et de la traverse liées par cette attache.

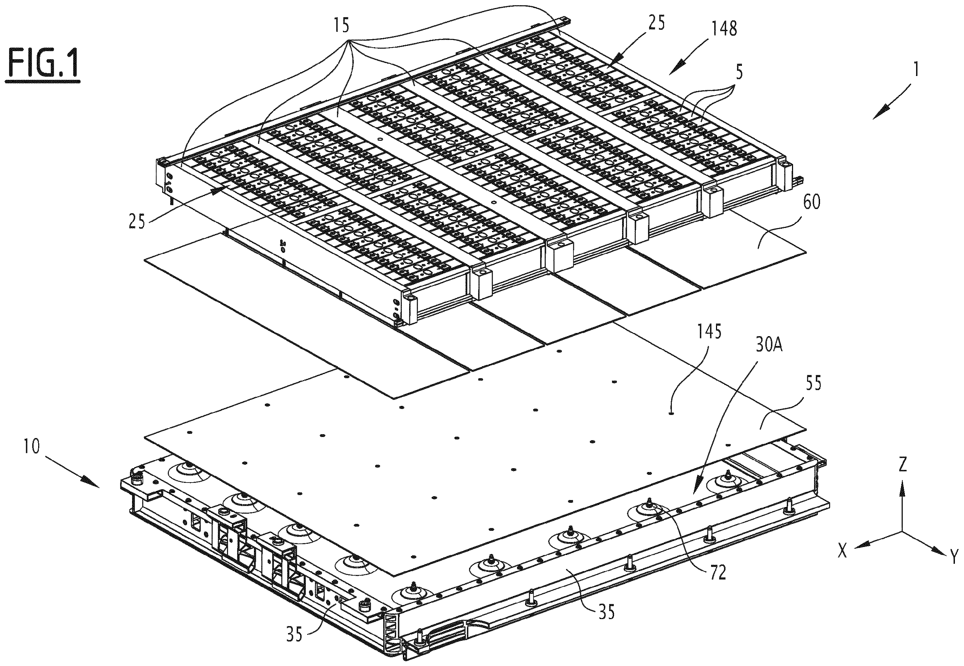

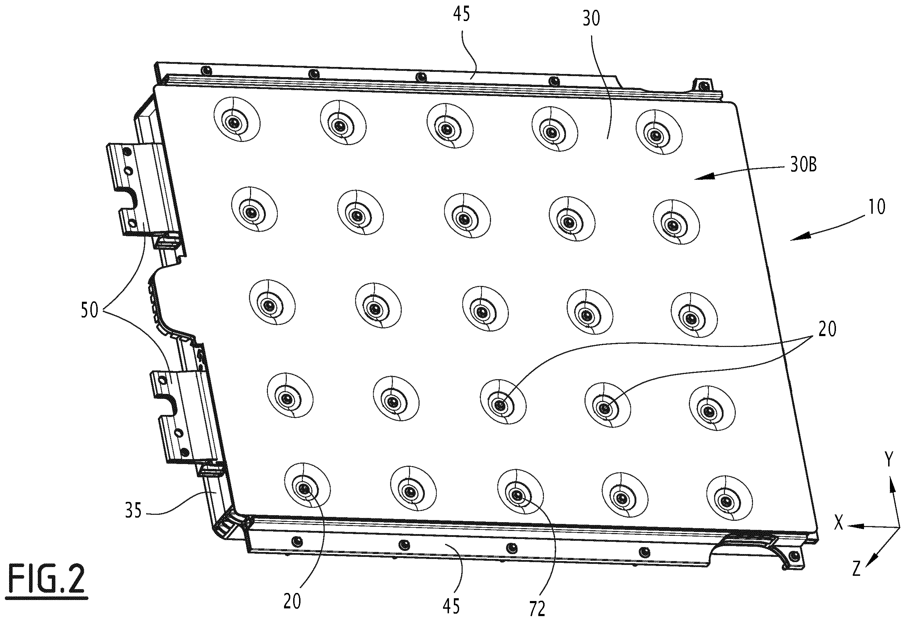

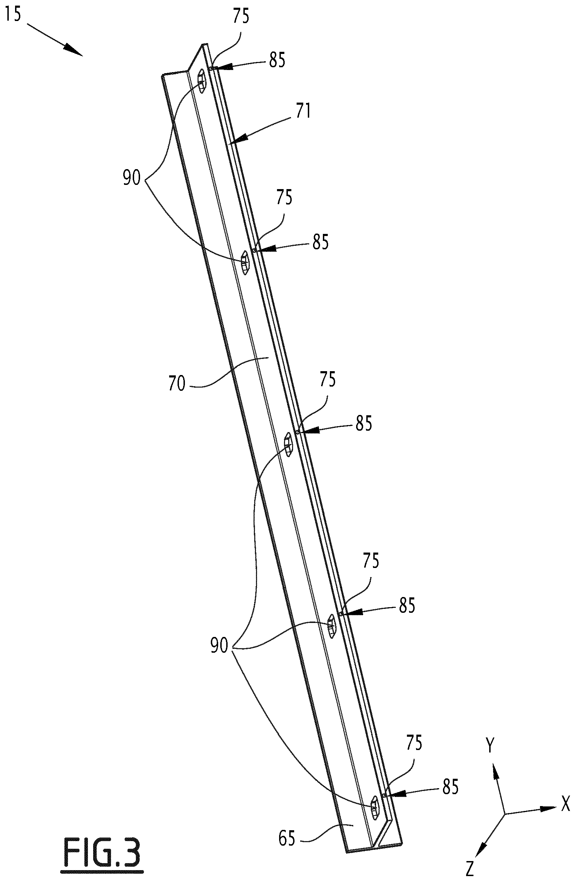

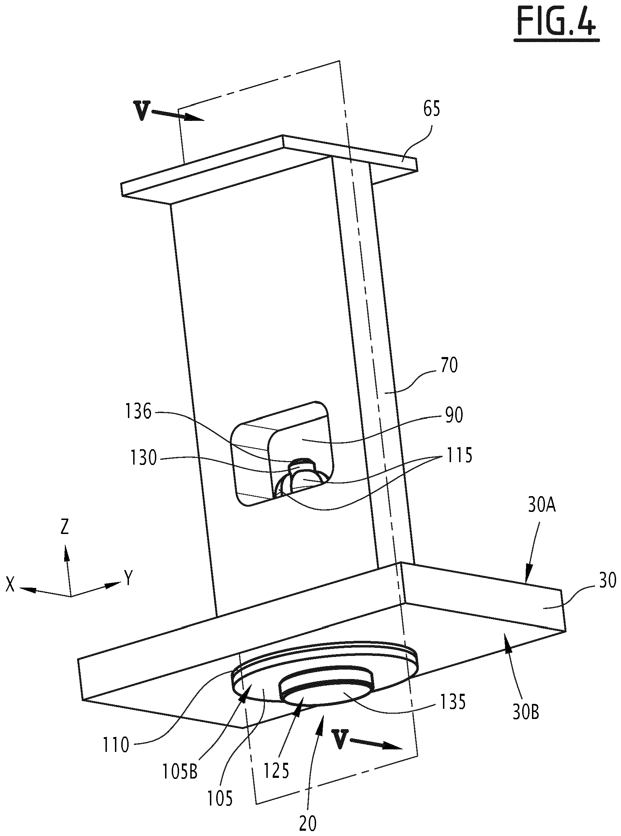

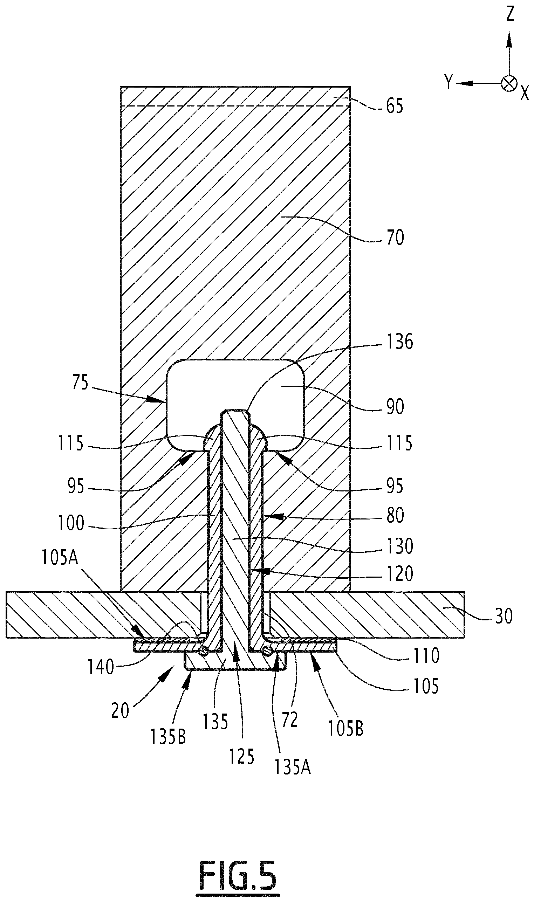

En référence aux figures 1 à 5, on décrit une batterie électrochimique 1 suivant l'invention.

La batterie 1 est notamment apte à être utilisée dans un véhicule électrique ou hybride.

La batterie 1 comprend une pluralité de cellules électrochimiques 5, comportant chacune une anode et une cathode, qui sont placées dans un boîtier 10. Plusieurs traverses 15 sont placées dans le boîtier 10 pour le renforcement mécanique de la batterie 1, plusieurs attaches 20 liant une même traverse 15 avec le boîtier 10.

Les cellules 5 sont avantageusement regroupées en modules 25.

Les cellules 5 d'un module 25 donné sont solidaires mécaniquement. Les cellules 5 d'un module 25 sont connectées électriquement entre elles en parallèle ou en série. Un module 25 comprend typiquement une vingtaine de cellules 5.

Les modules 25 sont connectés électriquement entre eux, en parallèle ou en série.

Dans l'exemple, la batterie 1 comporte cinq modules 25, chacun comprenant vingt-deux cellules 5.

Les modules 25 sont agencés dans le boîtier 10.

Le boitier 10 comprend à cette fin une plaque de fond 30 de forme rectangulaire. Les modules 25 sont placés au-dessus d'une surface interne 30A de la plaque de fond 30.

Avantageusement, le boîtier 10 comporte quatre parois latérales 35, chacune s'étendant à partir d'un côté de la plaque de fond 30 dans une direction Z normale à la plaque de fond.

En option, le boîtier 10 comprend au moins deux rails 45 s'étendant le long de deux bords opposés de la plaque de fond et/ou deux connecteurs 50 électriques, les rails 45 et les connecteurs 50 étant configurés pour permettre l'intégration de la batterie 1 dans un véhicule.

En option, une plaque de refroidissement 55, configurée pour faciliter l'évacuation de l'énergie thermique générée par la batterie 1 lors de son fonctionnement, est intercalée entre la surface interne 30A de la plaque de fond 30 et les modules 25.

La plaque de refroidissement 55 est avantageusement en métal, notamment en aluminium.

En option, une couche 60 de matériau conducteur thermique tel qu'une résine de polyuréthane comprenant un durcisseur, est intercalée entre chaque module 25et la plaque de refroidissement 55 le cas échéant.

La couche 60 est formée avec un polymère souple présentant une conductivité thermique élevée.

En variante, la couche 60 est formée dans un matériau semi-liquide de remplissage d'espace (en anglais, « gap filler ») présentant une conductivité thermique élevée.

Les modules 25, et, le cas échéant, la plaque de refroidissement 55 sont maintenus fixes par rapport au boîtier 10 au moyen des traverses 15.

Chaque traverse 15 est formé d'un profilé de section en L ou en T. Une traverse 15 comprend ainsi une table de compression 65 et un pilier 70 s'étendant à partir de la table de compression dans une direction normale à celle-ci.

La base du pilier 70 s'appuie sur la surface interne 30A de la plaque de fond 30 suivant une semelle d'appui 71, ou le cas échéant sur la plaque de refroidissement 55 ou la couche 60.

Chaque module 25 est donc enserré par la plaque de fond 30 et les tables de compression 65 d'au moins deux traverses 15, les piliers 70 respectifs bordant par ailleurs le module 25.

Les traverses 15 destinées à être placées entre deux modules 25 successifs présentent une section en T, c'est-à-dire que la table de compression 65 déborde de part et d'autre du pilier 70.

Pour les traverses 15 extrêmales, destinées à être placées au niveau des côtés de la plaque de fond 10, la section est en forme de L c'est-à-dire que la table de compression 65 ne s'étend que d'un côté du pilier 70.

Avantageusement, une traverse 15 est formée dans un matériau métallique. Chaque traverse 15 est liée au boîtier 10 par des attaches 20.

Pour ce faire, le boîtier 10 est percé d'une pluralité de trous 72 traversants dans la direction Z normale à la plaque de fond 30, au travers de chacun desquels une attache 20 est insérée.

Les trous 72 sont répartis sur des lignes au-dessus desquelles les semelles d'appui 71 des traverses 15 sont positionnées.

Avantageusement, les trous 72 sont formés sur chacune de ces lignes, de façon à ce que chaque traverse 15 soit liée au boîtier 10 par plusieurs attaches 20, deux trous 72 successifs d'une même ligne étant séparés d'une distance constante h. Dans l'exemple, cinq trous 72 sont équirépartis sur chacune de ces lignes.

Chaque traverse 15 comprend pour chaque attache 20 une cavité d'insertion 75 s'étendant dans le pilier 70 et comportant un conduit cylindrique 80 débouchant perpendiculairement à la semelle 71 par une ouverture 85.

Chacune des ouvertures 85 d'une traverse 15 est placée en regard d'un trou 72 respectif.

Le conduit 80 débouche par ailleurs sur un évidement 90 de section supérieure à celle du conduit 80, de sorte que le conduit 80 et l'évidement 90 forment un épaulement 95.

Avantageusement, la cavité d'insertion 75 s'étend dans une première moitié du pilier 70 à l'opposé de la table de compression 65, de préférence dans un premier tiers du pilier 70. Cette disposition permet de ne pas fragiliser la traverse 15 de manière excessive du fait de la formation de la cavité d'insertion 75, et ainsi de conserver une résistance mécanique satisfaisante de la traverse 75 et donc de la batterie 1.

Une attache 20 donnée comprend un corps 100 s'étendant suivant la direction Z entre une extrémité proximale et une extrémité distale. Le corps 100 s'étend à la fois au travers d'un trou 72 respectif et au travers d'une cavité d'insertion 75 respective.

Au niveau de l'extrémité proximale du corps 100, une tête 105 s'étend radialement à partir du corps 100. La tête présente une surface interne 105A en regard du fond 130 et une surface externe 105B opposée suivant la direction Z.

L'attache 20 comprend un joint 110, par exemple un joint plat ou torique, apte à assurer la fermeture étanche à l'air et/ou à l'eau du trou 72 respectif.

Dans l'exemple, le joint 110 est en contact avec une surface externe 30B de la plaque de fond 30 et avec la surface interne 105A de la tête 105.

Avantageusement, une gorge (non représentée) est usinée dans la surface interne 105A de la tête 105 pour faciliter le positionnement du joint 110.

En variante, le joint 110 est positionné au moins en partie dans le trou 72 en contact avec le corps 100 et avec la plaque de fond 30. Dans ce cas, une gorge est avantageusement usinée dans la surface cylindrique du corps 100 pour faciliter le positionnement du joint 110.

La présence du joint 110 permet de dimensionner le corps 100, le conduit 80 et le trou 72 respectifs avec une tolérance élevée, notamment de l'ordre de quelques millimètres, et en particulier suffisante pour permettre la dilatation thermique des différents éléments constituant la batterie 1 lors de son fonctionnement, et ce sans compromettre l'étanchéité à l'eau et/ou à l'air de l'ensemble.

On comprend notamment que le trou 72 peut avoir une forme elliptique, le grand axe de l'ellipse correspondant à une direction de dilatation privilégiée d'un module 25, et que les dimensions caractéristiques du trou 72 et celles du conduit 80 dans un plan normal à la direction Z peuvent être strictement supérieures, typiquement de quelques millimètres à celles du corps 100.

Quatre éléments d'ancrage 115 s'étendent transversalement à partir de l'extrémité distale du corps 100.

Les éléments d'ancrage 115 coopèrent avec l'épaulement 95 lorsqu'ils sont en position verrouillée. En conséquence, le corps 100 ne peut pas être translaté relativement à la traverse 15 respective suivant la direction Z.

En position déverrouillée, les éléments d'ancrage 115 ne coopèrent plus avec l'épaulement 95 de sorte que la translation du corps 100 relativement à la traverse 15 suivant la direction Z est possible.

Au moins une fraction du corps 100 est formée dans un matériau élastique, dont l'élasticité est choisie de sorte que les distances entre deux quelconques des éléments d'ancrage 115 peuvent être modifiée par déformation élastique. Ainsi l'attache 20 présente au moins une configuration de montage et une configuration relâchée. Les éléments d'ancrage 115 sont plus proches les uns des autres dans la configuration de montage que dans la configuration relâchée. En configuration de montage, le corps 100 peut être inséré dans la cavité d'insertion 75 et translaté dans cette cavité suivant la direction Z normale à la plaque de fond 30. Lorsque les éléments d'ancrage 115 sont en position verrouillée, l'attache 20 est dans sa configuration relâchée.

Avantageusement, le matériau élastique est choisi parmi un acier inoxydable et un matériau élastique de module d'Young de l'ordre de celui d'un acier inoxydable.

Le corps 100 comprend un alésage 120 s'étendant le long de la direction Z normale à la plaque de fond 30 à partir de son extrémité proximale.

Avantageusement, l'alésage 120 s'étend jusqu'à l'extrémité distale du corps 100. L'attache 20 comprend un élément 125 d'aide au verrouillage.

L'élément 125 comprend une tige 130 s'étendant dans la direction Z normale à la plaque de fond 30 entre une extrémité proximale et une extrémité distale.

Une tête 135 s'étend radialement à partir de l'extrémité proximale de la tige 130.

L'élément 125 est apte à être inséré par son extrémité distale dans l'alésage 120 du côté de la surface externe 105A.

Avantageusement, un chanfrein 136 est formé au niveau l'extrémité distale de la tige 130 pour faciliter son insertion dans l'alésage 120.

Lorsque l'extrémité distale de l'élément 125 affleure à l'extrémité proximale du corps 100, l'attache 20 est en configuration de montage.

Lorsque, après translation de l'élément 125 dans l'alésage 120 suivant la direction Z relativement au corps 100, la tête 135 est placée en contact avec la surface externe 105A de la tête 105, l'attache 20 est en configuration relâchée, le passage de la configuration de montage à la configuration relâchée ayant simultanément provoqué le passage des éléments d'ancrage 115 à la position verrouillée.

En d'autres termes, l'insertion de la tige 130 dans l'alésage 120 permet de provoquer la déformation élastique du corps 100 pour que l'attache 20 passe de la configuration de montage à la configuration relâchée, et que, simultanément, les éléments d'ancrage 115 passent dans la position verrouillée.

Inversement, le retrait de la tige 130 hors de l'alésage 120 permet de provoquer la déformation élastique du corps 100 pour que l'attache 20 passe de la configuration relâchée à la configuration de montage, et que, simultanément, les éléments d'ancrage 115 passent de la position verrouillée à une position déverrouillée qui permet le démontage de l'attache 20 par translation de celle-ci par rapport à la traverse 15 suivant la direction d'insertion Z en sens inverse du montage. La configuration de montage est donc dans ce cas aussi une configuration de démontage, les éléments d'ancrage 115 étant en position déverrouillée à l'issue de (respectivement juste avant) la translation du corps 100 de l'attache 20 relativement à la traverse 15 lors du montage (respectivement démontage).

L'élément 125 est muni d'un joint 140, par exemple un joint plat ou torique, propre à assurer une fermeture étanche à l'air et/ou à l'eau de l'alésage 120 au niveau de l'extrémité proximale du corps 100.

Avantageusement, une gorge (non représentée) est usinée à partir d'une surface interne 135A de la tête 135 et une gorge complémentaire est usinée à partir de la surface externe 105B de la tête 105 pour faciliter le positionnement du joint 140.

En variante, le joint 140 est positionné au moins en partie dans l'alésage 120 en contact avec le corps 100 et avec la tige 130. Dans ce cas, une gorge est avantageusement usinée à partir d'une surface externe de la tige 130 pour faciliter le positionnement du joint 140.

Dans l'exemple, chaque module 25 est maintenu fixe par rapport au boîtier 10 au moyen de deux traverses 15, chacune de ces traverses 15 étant liée au boîtier 10 par l'intermédiaire de cinq attaches 20.

Avantageusement, les trous 72 sont tous identiques, les cavités d'insertion 75 sont toutes identiques et les attaches 20 sont toutes identiques.

Avantageusement, des trous 145 substantiellement superposables aux trous 72 sont ménagés dans la plaque de refroidissement 55.

Les attaches 20 permettent un montage et un démontage de la batterie 1 facile et rapide, et notamment sans opération de vissage, tout en assurant une bonne résistance mécanique de la batterie 1 aux chocs et à la déformation thermique, en particulier grâce aux procédés de montage et de démontage décrits ci-après.

Pour le montage de la batterie 1 de la figure 1, on assemble au préalable les cinq modules 25 avec les deux traverses extrêmales 15 de profil en L et les quatre traverses 15 de profil en T intercalées entre deux modules 25 successifs par vissage, pour former un ensemble 148 de modules 25.

Puis on positionne l'ensemble 148 sur la plaque de fond 30 de manière à ce que les ouvertures 85 des cavités d'insertion 75 de chacune des traverses 15 soient en regard des trous 72 respectifs, après avoir placé successivement au-dessus de la surface interne 30A la plaque de refroidissement 55 et la couche 60 respective.

On insère alors dans chacun des trous 72 respectifs, l'extrémité distale du corps 100 d'une attache 20, dans lequel la tige 130 d'un élément 125 a été insérée partiellement au préalable de sorte que l'attache 20 soit en configuration de montage (les éléments d'ancrage 115 étant donc au plus proche les uns des autres).

On translate les attaches 20, y compris l'élément 125 suivant la direction Z normale à la plaque de fond 30 relativement au boîtier 10 et à la traverse 15, par exemple en exerçant une force pressante sur la tête 105 dans cette direction, jusqu'à ce que le joint 110 soit en contact à la fois avec la surface externe 30B et avec la surface interne 105A, et que les éléments d'ancrage 115 soient positionnés dans l'évidement 90.

Puis, on translate l'élément 125 suivant la direction Z normale à la plaque de fond 30 relativement au corps 100, par exemple en exerçant une force pressante sur la tête 105 dans cette direction, jusqu'à ce que le joint 140 soit en contact avec la surface externe 105B et la surface interne 135A, et à provoquer simultanément la déformation élastique de l'attache 20. A l'issue de cette déformation élastique, les éléments d'ancrage 115 coopèrent avec l'épaulement 95. L'attache 20 est donc passée de la configuration de montage à la configuration relâchée, et simultanément les éléments d'ancrage 115 sont passés en position verrouillée.

En variante, l'élément 125 est inséré dans l'alésage 120 une fois que le corps 100 est en place dans la traverse 15.

Le montage de la batterie 1 est facile, rapide et ne nécessite aucune étape de vissage, ni même aucun mouvement de rotation. Ainsi, la tolérance de l'assemblage est contrôlée par la tolérance sur les dimensions des éléments constituant la batterie 1 mais pas par une tolérance sur une chaîne d'efforts.

Pour le démontage, on translate l'élément 125 de chaque attache 20 relativement au corps 100 suivant la direction Z en sens inverse du montage, de manière à provoquer la déformation élastique de l'attache 20, de sorte que les éléments d'ancrage 115 ne coopèrent plus avec l'épaulement 95. L'attache 20 passe ainsi de la configuration relâchée à la configuration de montage et simultanément, les éléments d'ancrage 115 passent de la position verrouillée à la position déverrouillée.

La translation de l'élément 125 peut être effectuée au moyen d'un outil de préhension coopérant avec la tête 135 ou d'un outil formant levier, que l'on vient insérer entre la surface interne 135A de l'élément 125 d'aide au verrouillage et la surface externe 105B de la tête 105.

Il ne reste alors plus qu'à extraire chaque attache 20 en configuration de montage, y compris l'élément 125 le cas échéant, de la cavité d'insertion 75 et du trou 72 respectifs, par translation de cette attache 20 suivant la direction Z normale à la plaque de fond 30 relativement au boîtier 10 et à la traverse 15 respective en sens inverse du montage.

Cette translation de l'attache 20 peut elle aussi être effectuée au moyen d'un outil de préhension coopérant avec la tête 105 ou d'un outil formant levier que l'on vient insérer entre la surface interne 105A et la surface externe 30B.

Le démontage d'un ensemble 148 hors du boîtier 10 est aisé, ne nécessite aucune opération de dévissage.

Comme aucun mouvement de rotation n'est nécessaire, les attaches 20, y compris les joints 110, 140 qui n'ont pas subi de torsion, peuvent être réutilisés ultérieurement.

Dans un deuxième mode de réalisation, le conduit 80 et l'attache 20 sont de plus configurés pour que les positions verrouillée et déverrouillée des éléments d'ancrage 115 l'attache 20 diffèrent seulement d'une rotation de ces éléments d'ancrage 115 d'une fraction de tour, par exemple d'un quart de tour, autour de la direction Z normale à la plaque de fond 30 relativement à l'épaulement 95.

Lorsque les éléments d'ancrage 115 sont en position verrouillée, l'attache 20 est en configuration relâchée et les éléments d'ancrage 115 coopèrent avec l'épaulement 95 respectif de la cavité d'insertion 75.

Lorsque les éléments d'ancrage 115 passent en position déverrouillée après avoir été en position verrouillée, l'attache 20 est toujours en configuration relâchée, mais le corps 100 et les éléments d'ancrage 115 forment une partie mâle complémentaire du conduit 80 et ne coopèrent de ce fait plus avec l'épaulement 95 respectif.

Il n'y a donc pas de modification de la forme de l'attache 20 par déformation élastique lorsque les éléments d'ancrage 115 passent de la position verrouillée et la position déverrouillée, l'attache 20 restant en configuration relâchée pour ce passage.

La modification de la forme de l'attache 20 par déformation élastique n'est utilisée que pour le montage de l'attache 20 qui se fait de la même manière que pour le premier mode de réalisation. Aucune rotation relativement à la traverse 15 n'est nécessaire pour passer placer les éléments d'ancrage 115 en position verrouillée à partir de la configuration de montage de l'attache 20.

On comprend donc que dans le deuxième mode de réalisation, les formes de l'attache 20, de même que les orientations des éléments d'ancrage 115 relativement à la cavité 75, pour le montage de l'attache 20 en configuration de montage avant verrouillage des éléments d'ancrage 115, et pour le démontage de l'attache 20 en configuration relâchée après déverrouillage des éléments d'ancrage 115, sont différentes.

Le procédé de montage de la batterie 1 est similaire à celui du premier mode de réalisation

Dans ce cas, le démontage des attaches 20 comprend la rotation d'une fraction de tour, par exemple d'un quart de tour, autour de la direction Z normale à la plaque de fond 30 de chacune de ces attaches 20 par rapport à la traverse 15 respective pour faire passer les éléments d'ancrage 115 de l'attache 20 de la position verrouillée à la position déverrouillée. L'élément 125 reste simultanément fixe par rapport à l'attache 20, de sorte qu'aucune déformation élastique de l'attache 20 n'est possible : l'attache 20 reste en configuration relâchée.

Il ne reste alors plus qu'à extraire chaque attache 20 en configuration relâchée, y compris l'élément 125, de la cavité d'insertion 75 et du trou 72 respectifs, par translation de cette attache 20 suivant la direction Z normale à la plaque de fond 30 relativement au boîtier 10 et à la traverse 15 respective, en sens inverse du montage.

Pour une éventuelle réutilisation de l'attache 20, l'élément 125 peut ultérieurement être translaté suivant la direction Z normale à la plaque de fond 30, en sens inverse du montage relativement au corps 130 de manière provoquer la déformation élastique de l'attache 20 de sorte que l'attache 20 passe de la configuration relâchée à la configuration de montage.

Il peut être nécessaire de remplacer le joint 110 qui a subi une torsion au démontage. Le joint 140 peut quant à lui être réutilisé.

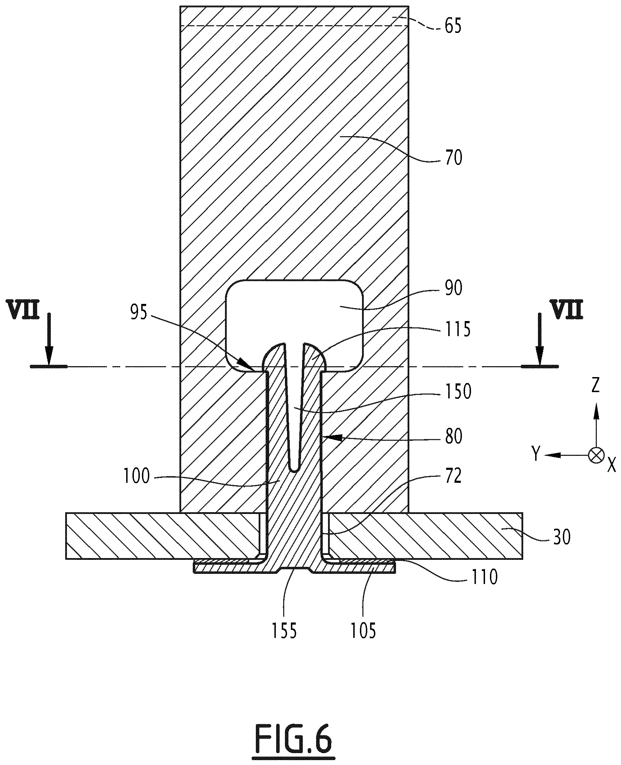

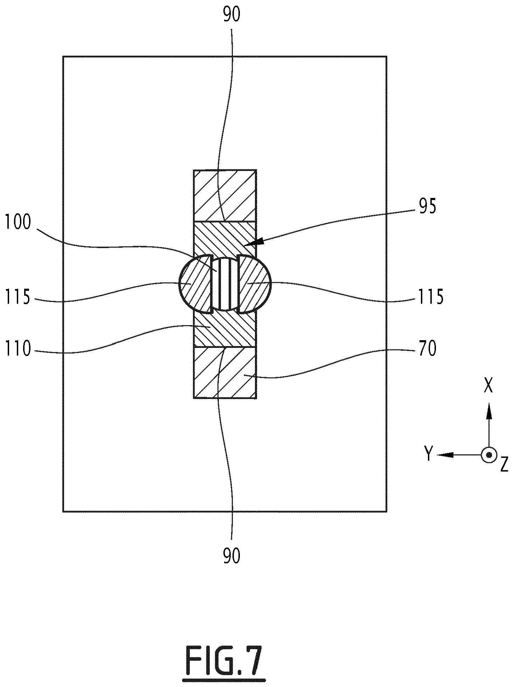

Dans un troisième mode de réalisation, représenté sur les figures 6 et 7, l'attache 20 ne comprend pas d'élément 125 d'aide au verrouillage ni d'alésage 120.

En revanche, une fente 150 est ménagée dans le corps 100 à partir de son extrémité distale pour permettre le passage de l'attache 20 de la configuration de montage à la configuration relâchée par déformation élastique, ce passage permettant d'obtenir le passage des éléments d'ancrage 115 vers la position verrouillée.

Comme dans le deuxième mode de réalisation, le conduit 80 est de plus configuré pour que les positions verrouillée et déverrouillée des éléments d'ancrage 115 de l'attache 20 respective diffèrent d'une rotation de ces éléments d'ancrage 115 d'une fraction de tour, par exemple d'un quart de tour, autour de la direction Z normale à la plaque de fond 30 relativement à l'épaulement 95.

Là encore, les formes de l'attache 20, de même que les orientations des éléments d'ancrage 115 relativement à la cavité 75 pour le montage de l'attache 20 est en configuration de montage avant verrouillage des éléments d'ancrage 115, et pour le démontage de l'attache 20 en configuration relâchée après déverrouillage des éléments d'ancrage 115, sont différentes.

Optionnellement, la tête 105 comprend au niveau de la surface externe 105B une forme 155, en creux ou saillante, configurée pour faciliter la préhension de l'attache 20 en vue du démontage.

Pour l'insertion de l'attache 20 dans le trou 72 et la cavité d'insertion 75 respective, on positionne l'attache 20 en configuration de montage, c'est-à-dire que l'on provoque la déformation élastique de l'attache 20 de manière à rapprocher les éléments d'ancrage 115 les uns des autres. Cela peut notamment être obtenu en refroidissant l'attache 20.

Puis on translate les attaches 20 en configuration de montage suivant la direction Z relativement à la traverse 15, par exemple en exerçant une force pressante dans cette direction, jusqu'à ce que le joint 110 soit en contact avec la surface externe 30B et avec la surface interne 105A, et que les éléments d'ancrage 115 soient positionnés dans l'évidement 90.

Enfin, on laisse l'attache 20 se déformer élastiquement de la configuration de montage à la configuration relâchée, de sorte que les éléments d'ancrage 115 coopèrent avec l'épaulement 95. Cela peut notamment être obtenu spontanément du fait du réchauffement de l'attache 20.

Pour le démontage, on procède *mutatis mutandis* de manière analogue au deuxième mode de réalisation.

Dans un quatrième mode de réalisation, l'attache 20 n'est pas déformable élastiquement, le passage des éléments d'ancrage 115 de la position verrouillée à la position déverrouillée étant obtenu par une étape inverse du passage de la position verrouillée à la position déverrouillée, à savoir uniquement par une rotation de l'attache 20 d'une fraction de tour, par exemple d'un quart de tour, autour de la direction Z normale à la plaque de fond 30 relativement à la traverse 15 en sens inverse.

Dans ce cas, l'attache 20 est analogue à celle du troisième mode de réalisation, à l'exception de la fente 150 qui est supprimée et du matériau constituant le corps (100) qui n'est plus élastique.

Le montage et le démontage sont alors obtenus par des procédés inverses l'un de l'autre et n'impliquent aucune déformation élastique.

## Revendications

1. Batterie électrochimique (1) comprenant un boîtier (10), le boîtier (10) comprenant au moins une plaque de fond (30) et renfermant une pluralité de cellules électrochimiques (5), chacune placée sur la plaque de fond (30),
le boîtier (10) comportant au moins une traverse (15) liée à la plaque de fond (30) par au moins une attache (20) engagée suivant une direction d'insertion (Z) dans une cavité d'insertion (75) de la traverse (15) au travers d'un trou (72) de la plaque de fond (30), l'attache (20) comprenant un corps (100), dont une extrémité distale est reçue dans la cavité d'insertion (75) de ladite traverse (15), et une tête (105) s'étendant radialement à partir du corps (100) à une extrémité proximale du corps (100), la tête (105) étant en appui sur la plaque de fond (30),
la batterie électrochimique (1) étant **caractérisée en ce que** :
la cavité d'insertion (75) comporte un épaulement (95) transversal à la direction d'insertion (Z), et
l'au moins une attache (20) comporte au moins un élément d'ancrage (115) faisant saillie transversalement par rapport au corps (100) au niveau de son extrémité distale,
l'élément d'ancrage (115) de l'attache (20) coopérant dans une position verrouillée avec l'épaulement (95) pour bloquer l'attache (20) en translation par rapport à la traverse (15) et au boîtier (10) suivant la direction d'insertion (Z).

2. Batterie électrochimique (1) suivant la revendication 1 dans laquelle l'au moins une traverse (15) comprend un pilier (70) dans lequel est ménagée la cavité d'insertion (75) et une table de compression (65) s'étendant perpendiculairement au pilier (70), au moins une cellule électrochimique (5) étant enserrée entre la table de compression (65) et la plaque de fond (30).

3. Batterie électrochimique (1) suivant la revendication 2, dans laquelle la cavité d'insertion (75) s'étend dans une première moitié du pilier (70) à l'opposé de la table de compression (65).

4. Batterie électrochimique (1) suivant l'une quelconque des revendications précédentes, dans laquelle l'attache (20) est munie d'un joint (110) assurant la fermeture étanche à l'air et/ou à l'eau du trou (72) respectif.

5. Batterie électrochimique (1) suivant l'une quelconque des revendications précédentes, dans laquelle l'au moins une attache (20) assemble la traverse (15) respective et la plaque de fond (30) de manière amovible, l'élément d'ancrage (115) de l'attache (20) étant déplaçable par rapport à l'épaulement (95) entre la position verrouillée et au moins une position déverrouillée, dans laquelle l'élément d'ancrage (115) de l'attache (20) ne coopère pas avec l'épaulement (95).

6. Batterie électrochimique (1) suivant la revendication précédente, dans laquelle l'attache (20) et la cavité d'insertion (75) respective sont configurées pour que la position verrouillée et la position déverrouillée de l'élément d'ancrage (115) diffèrent d'une rotation d'une fraction de tour suivant la direction d'insertion (Z) par rapport à la traverse (15).

7. Batterie électrochimique (1) suivant l'une quelconque des revendications précédentes, dans laquelle au moins une fraction du corps (100) de l'attache (20) est formée dans un matériau élastique et configurée pour que l'attache (20) soit déformable élastiquement entre une configuration de montage, dans laquelle la translation du corps (100) dans la cavité d'insertion (75) suivant la direction d'insertion (Z) est possible, et une configuration relâchée, l'attache (20) étant dans la configuration relâchée si l'élément d'ancrage (115) de l'attache (20) est en position verrouillée.

8. Batterie électrochimique (1) suivant la revendication 7, dans laquelle un alésage (120) s'étend dans le corps (100) suivant la direction d'insertion (Z) à partir de son extrémité proximale, l'attache (20) comprenant en outre un élément d'aide au verrouillage (125) amovible et qui comporte une tige (130) s'étendant suivant la direction d'insertion (Z), l'élément d'aide au verrouillage (125) étant configuré pour que son insertion dans l'alésage (120) puis sa translation suivant la direction d'insertion (Z) provoquent le passage de l'attache (20) de la configuration de montage à la configuration relâchée par déformation élastique, et inversement si l'élément d'aide au verrouillage (125) est ultérieurement retiré de l'alésage (120).

9. Batterie électrochimique (1) suivant la revendication 8, dans laquelle l'élément d'aide au verrouillage (125) comporte un joint (140) d'étanchéité entre le corps (100) et l'élément d'aide au verrouillage (125).

10. Procédé d'assemblage d'une batterie électrochimique (1) suivant l'une quelconque des revendications précédentes, la méthode d'assemblage comprenant :
a) le positionnement d'au moins une cellule électrochimique (5) sur la plaque de fond (30) du boîtier (10) et d'au moins une traverse (15) en regard de la plaque de fond (30);
b) l'insertion dans le trou (72) de l'extrémité distale du corps (100) de l'au moins une attache (20) ;
c) la translation du corps (100), relativement à la traverse (15) et au boîtier (10) suivant la direction d'insertion (Z), à travers le trou (72) et une cavité d'insertion (75) de la traverse (15), jusqu'à ce que la tête (105) de l'attache (20) soit en contact avec la plaque de fond (30) ; et
d) le passage de l'élément d'ancrage (115) de l'attache (20) dans la position verrouillée, dans laquelle l'élément d'ancrage (115) coopère avec l'épaulement (95) pour bloquer l'attache (20) en translation par rapport à la traverse (15) et au boîtier (10) suivant la direction d'insertion (Z).

11. Procédé d'assemblage suivant la revendication 10 dans lequel le passage de l'élément d'ancrage (115) de l'attache (20) à la position verrouillée est obtenu par rotation d'une fraction de tour suivant la direction d'insertion (Z) par rapport à la traverse (15) respective.

12. Procédé d'assemblage suivant la revendication 10, dans lequel :
- au moins une fraction du corps de l'attache (20) est formée dans un matériau élastique, et
- pour ladite insertion dans le trou (72) et ladite translation du corps (100), l'attache (20) est dans une configuration de montage, dans laquelle la translation du corps (100) dans la cavité d'insertion (75) suivant la direction d'insertion (Z) est possible, et
- le passage de l'élément d'ancrage (115) de l'attache (20) dans la position verrouillée est obtenu par une déformation élastique de l'attache (20) de la configuration de montage à une configuration relâchée.

13. Procédé de démontage d'une batterie électrochimique (1) assemblée suivant le procédé de la revendication 11 ou de la revendication 12 comprenant :
- le passage de l'élément d'ancrage (115) de l'attache (20) de la position verrouillée à une position déverrouillée, dans laquelle l'élément d'ancrage (115) de l'attache (20) ne coopère pas avec l'épaulement (95), par rotation d'une fraction de tour suivant la direction d'insertion (Z) par rapport à la traverse (15),
- la translation du corps (100) suivant la direction d'insertion (Z) en sens inverse de l'assemblage à travers le trou (72) jusqu'à ce que le corps (100) soit hors du boîtier (10) et de la traverse (15).

14. Procédé d'assemblage suivant la revendication 12,
- le corps (100) de l'attache (20) comprenant en outre un alésage (120) s'étendant suivant la direction d'insertion (Z) à partir de l'extrémité proximale du corps (100),
- l'attache (20) comprenant en outre un élément d'aide au verrouillage (125) amovible et qui comporte une tige (130) s'étendant suivant la direction d'insertion (Z),
le procédé comprenant en outre l'insertion de l'élément d'aide au verrouillage (125) dans l'alésage (120) et sa translation suivant la direction d'insertion (Z) pour faire passer l'attache (20) par déformation élastique de la configuration de montage à la configuration relâchée et provoquer simultanément le passage de l'élément d'ancrage (115) de l'attache (20) dans la position verrouillée.

15. Procédé de démontage d'une batterie électrochimique (1) assemblée suivant le procédé de la revendication 14 comprenant :
- le retrait de l'élément d'aide au verrouillage (125) hors de l'alésage (120) par translation relativement au corps (100) suivant la direction d'insertion (Z) en sens inverse de l'assemblage, pour provoquer le passage de l'attache (20) de la configuration relâchée à la configuration de montage par déformation élastique et simultanément le passage de l'élément d'ancrage (115) de la position verrouillée à une position déverrouillée dans laquelle l'élément d'ancrage (115) ne coopère pas avec l'épaulement (95), puis
- le retrait du corps (100) hors de la cavité d'insertion (75) et du trou (72) par translation relativement à la traverse (15) respective et au boîtier (10) suivant la direction d'insertion (Z) en sens inverse de l'assemblage.
